# EUROPEAN PATENT APPLICATION

(11) **EP 2 835 598 A1**
(43) Date of publication of application: **11.02.2015**
(21) Application number: 13755482.0
(22) Date of filing: 27.02.2013
(51) Int. Cl.: F24H 1/18, F24H 1/00

(54) **METHOD FOR CONTROLLING AND DEVICE FOR CONTROLLING COGENERATION SYSTEM**

(30) Priority: 29.02.2012 JP 2012043575
(71) Applicant: JX Nippon Oil & Energy Corporation, Chiyoda-ku Tokyo 100-8162 (JP)
(72) Inventor: HIWATARI, Manabu, Tokyo 100-8162 (JP)
(74) Representative: Patentanwälte Vollmann & Hemmer
(86) International application number: PCT/JP2013/055184
(87) International publication number: WO 2013/129493

(57) **Abstract**

In a cogeneration system that stores hot water heated by exhaust heat of a generator in a hot water storage tank, during return to normal control from anti-freezing control, the return to the normal control is rapidly performed and freezing of water in a water circulating passage is also suppressed, suppressing the drop in system efficiency. When a freezing condition, indicating a risk of freezing of the water in the water circulating passage such as a radiator unit, is met, the anti-freezing control is executed. When a cancellation condition of the anti-freezing control is met, a heat recovery temperature target value (first return target value) SVTf2 at the outlet of the generator is set to a minimum target temperature SVTf2_min. Until an actual heat recovery outlet temperature (actual temperature) PVTf2 reaches a standard target value Tf2_std, every time the actual temperature PVTf2 reaches a value obtained by subtracting a predetermined temperature x from the first return target value SVTf2, the first return target value SVTf2 is updated to a value obtained by adding a predetermined temperature y (> x).

## Description

### TECHNICAL FIELD

The present invention relates to a cogeneration system which heats water by recovering heat (exhaust heat) generated from a generator, such as a fuel cell, and stores the heated water in a hot water storage tank, and in particular, relates to a control technology at the time of returning to normal control from anti-freezing control to be executed in a situation in which water for recovering heat has a risk of freezing.

### BACKGROUND ART

In such a cogeneration system provided with a water circulating passage through which water is circulated between the generator and the hot water storage tank, there is a problem that water in the water circulating passage may be frozen in a cold season. In particular, a cooling radiator unit interposed in a flow passage, which supplies the water in the bottom of the hot water storage tank to the generator, is exposed to a low-temperature outside air and thus may be super-cooled, thereby the freezing of the water may easily occur in the radiator unit since the radiator itself cannot be covered with, for example, a thermal insulator.

Therefore, in Patent Document 1, water heated by a generator (fuel cell) is circulated through a radiator in such a way as bypassing a hot water storage tank to suppress freezing in a cold season.

Furthermore, in Patent Document 2, water is circulated through a radiator in such a way as bypassing a hot water storage tank when a water temperature in the hot water storage tank is high and the water in the hot water storage tank is heated by an auxiliary heat source while being circulated through the radiator when the water temperature in the hot water storage tank is low, to suppress freezing in a cold season.

### CITATION LIST

### PATENT DOCUMENTS

Patent Document 1: Japanese Paten Application Laid-open Publication No. 2009-257656
Patent Document 2: Japanese Paten Application Laid-open Publication No. 2007-278579

### SUMMARY OF THE INVENTION

### PROBLEMS TO BE SOLVED BY THE INVENTION

However, Patent Documents 1 and 2 involve the following problems.

If a risk of the freezing is temporarily eliminated by anti-freezing control for turning up the water temperature, the anti-freezing control is canceled and the normal control is performed, but a temperature of water (inlet temperature of a heat exchanging unit) supplied to the generator drops when the operation returns to the normal control.

In the normal control, a generator outlet-side water temperature (outlet temperature of the heat exchanging unit) is maintained at a constant high-temperature by controlling to reduce a water circulating flow rate when the generator outlet-side temperature is low and by controlling to increase the water circulating flow rate when the generator inlet-side temperature is high. For this reason, the water circulating flow rate is reduced depending on a decrease in the generator inlet-side temperature by the return to the normal control from the anti-freezing control.

Here, immediately after anti-freezing cancellation, difference between the generator inlet-side temperature decreased as described above and a target value of the generator outlet-side temperature is great. Therefore, the water circulating flow rate is largely reduced by a water circulator in the circulating passage to rapidly raise the water temperature.

However, when the circulating flow rate is largely reduced at a state in which the temperature of the circulating water is still low immediately after cancellation of the anti-freezing control, the shift to a state which is easy to freeze may occur again. In particular, radiation is promoted at the radiator unit in a situation in which the wind is blowing, and a risk of re-freezing of the circulating water in the water circulating passage may be high.

Furthermore, when the cancellation condition of the anti-freezing control is set to be high in order to avoid the above situation (cancelation threshold of temperature of outside air temperature or circulating water temperature is set to be high), the anti-freezing control may be prolonged and the operation efficiency of the system may decrease.

Patent Document 1 does not disclose a method for avoiding the risk of the re-freezing due to the decrease in the generator inlet-side temperature at the time of switching to the normal control by canceling the anti-freezing control.

In Patent Document 2, the water circulating passage is decided based on the water temperature in the hot water storage tank without referring the generator inlet-side temperature, and thus the anti-freezing control by circulating through a bypass passage may be executed for a long time and the system efficiency may be dropped. Furthermore, in a system using a solid oxide fuel cell (SOFC) as the generator, there may be a possibility of falling into a shortage in reforming water due to a rising of a cooling water temperature.

The present invention has been made in view of such problems in the related art and an object thereof is to provide a device and a method for controlling a cogeneration system in which the return to the normal control is rapidly performed and the re-freezing of the water is also suppressed by performing appropriate return control when the anti-freezing control is canceled and the shift to the normal control is performed, thereby suppressing the drop in efficiency of the system.

### MEANS FOR SOLVING THE PROBLEMS

For that reason, a device for controlling a cogeneration system according to the present invention includes: a generator for generating electricity that produces heat; a hot water storage tank that stores water; a first flow passage that supplies water in the hot water storage tank to a heat exchanging unit of the generator; a second flow passage that supplies hot water heated by the heat exchanging unit of the generator into the hot water storage tank; a water circulator that circulates water in a water circulating passage including the generator, the hot water storage tank, the first flow passage, and the second flow passage; a temperature measuring unit that measures a water temperature of the second flow passage; and a control unit that executes normal control in which the water circulator is operated such that a water temperature at a specific part of the second flow passage is close to a standard target value, anti-freezing control in which freezing of the water in the water circulating passage is suppressed when a freezing condition of the water circulating passage is met, and return control in which a first return target value of the water temperature at the specific part of the second flow passage is raised in a stepwise up to the standard target value for the normal control at the time of shifting to the normal control from the anti-freezing control.

Similarly, according to the present invention, a method for controlling a cogeneration system including the generator, the hot water storage tank, the first flow passage, the second flow passage, and the water circulator described above, includes: executing normal control in which a heat recovery temperature of a generator outlet is set as a target value; executing anti-freezing control when a freezing condition of the water circulating passage is met; and executing return control in which a target value of the water temperature is gradually raised up to a target value for the normal control at the time of shifting to the normal control from the anti-freezing control after canceling the freezing condition.

### EFFECTS OF THE INVENTION

With respect to the water temperature at the specific part of the second flow passage, at the time of shifting to the normal control from the anti-freezing control, the control is performed so as to raise the first return target value set for use during the shift, in a stepwise up to a final standard target value for the normal control. Thus, since the water circulating flow rate gradually decreases with the stepwise rising of the water temperature, it is possible to shift to the normal control while suppressing re-freezing in the water circulating passage.

Furthermore, since it is not necessary to set a target value of the water temperature to a high temperature more than needs as the cancellation condition of the anti-freezing control, the anti-freezing control is not prolonged and the drop in efficiency of the system can be suppressed.

### BRIEF DESCRIPTION OF DRAWINGS

- Fig. 1: is a block diagram schematically illustrating a cogeneration system according to the present invention.
- Fig. 2: is a flowchart according to a first embodiment of control for determining whether or not anti-freezing control is carried out in the above system.
- Fig. 3: is a block diagram illustrating an example of storing surplus power in a rechargeable battery during return control.
- Fig. 4: is a flowchart according to a second embodiment of control for determining whether or not anti-freezing control is carried out in the above system.

### MODE FOR CARRYING OUT THE INVENTION

Hereinafter, embodiments of the present invention will be described with reference to the drawings.

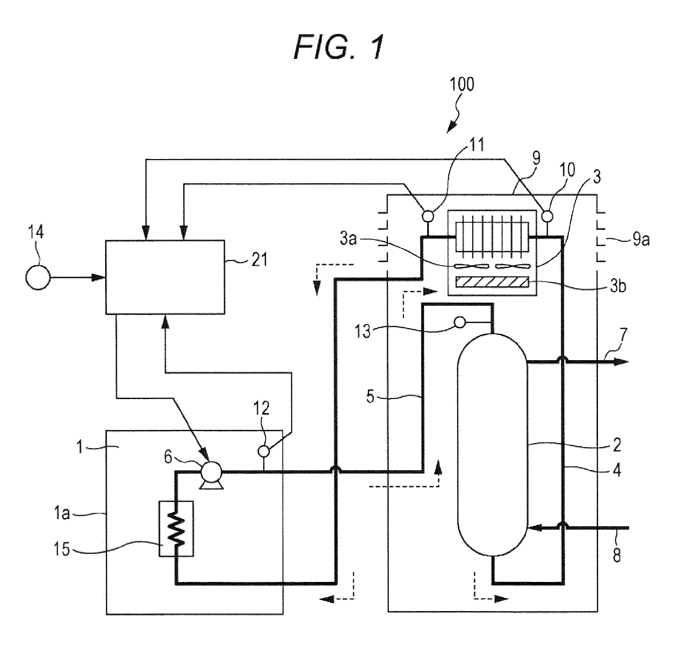

- Fig. 1: is a diagram schematically illustrating a cogeneration system 100 according to embodiments of the present invention.

The system 100 includes a generator 1 for generating electricity that produces heat, a hot water storage tank 2 that stores water, a first flow passage 4 that supplies relatively low-temperature water stored in a bottom of the - hot water storage tank 2 to a heat exchanging unit of the generator 1 through a radiator 3, and a second flow passage 5 which supplies hot water heated by the heat exchanging unit of the generator 1 to an upper part of the hot water storage tank 2. Then, a water circulating passage is configured to circulate water between the generator 1 and the hot water storage tank 2, by a water circulator 6 interposed in the second flow passage 5.

Examples of the generator 1 include those using a gas turbine as a driving source in addition to a fuel cell such as a polymer electrolyte fuel cell (PEFC) or a solid oxide fuel cell (SOFC).

A hot-water outflow pipe 7 is connected to the upper part of the hot water storage tank 2 to effuse the hot water and a water supply pipe 8 is connected to the bottom of the - hot water storage tank to supply urban water (normal-temperature water).

The radiator 3 is provided with a fan 3a and a heater 3b and is placed at an upper space within a tank housing 9 together with the hot water storage tank 2. An air vent 9a is opened at the upper space of the tank housing 9.

The water circulator 6 is housed in a case 1 a of the generator 1 in the present embodiment, but is not limited to this example of arrangement.

In addition, a first temperature sensor 10 that measures a radiator inlet temperature Tr1, a second temperature sensor 11 that measures a radiator outlet temperature Tr2, a third temperature sensor 12 that measures an outlet temperature Tf2 of the generator 1, a fourth temperature sensor 13 that measures an inlet temperature Ts1 of the hot water storage tank 2, and a fifth temperature sensor 14 that measures an environmental temperature (outside air temperature) are disposed to control the water circulator 6 or the like. Then, temperature measurement values obtained by these sensors are input to a controller 21.

In the cogeneration system 100 having such a configuration, the controller 21 performs the control (anti-freezing control) to suppress freezing of the water in the water circulating passage, especially in the radiator 3 unit, which is exposed to the outside air and thus may be easily super-cooled, in a cold season such as winter.

In addition, when the risk of freezing of the water in the water circulating passage is eliminated by execution of the anti-freezing control, the anti-freezing control is canceled and the return to the normal control is performed.

Then, the control of the system 100 including return control which shifts toward the normal control from the anti-freezing control is performed as follows.

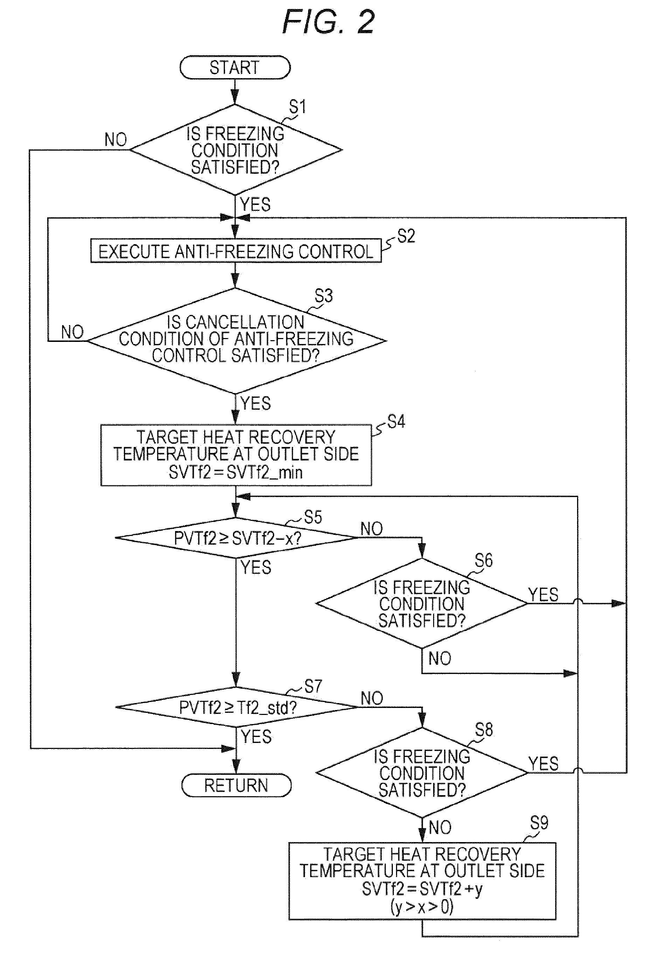

- Fig. 2: illustrates a flow of the control.
In step S1, it is determined whether or not a freezing condition, in which the water in the water circulating passage, especially, the water in the radiator unit has a risk of the freezing in a case of leaving the system without any measure, is met. The freezing condition may be a well-known condition that, for example, the environmental temperature (outside air temperature) is lower than or equal to a predetermined value, but, for example, an increase in temperature difference between the upstream side and the downstream side of the radiator due to stronger wind or the decrease in water circulating flow rate may be added to the condition.

When the freezing condition is met, a process proceeds to step S2 and then the anti-freezing control is executed. Specifically, control is performed to increase the water circulating flow rate by temporarily increasing a driving amount of the water circulator 6. As described above, when the water circulating flow rate increases, the amount of cooling per unit amount of the water is reduced and thus the freezing of the water in the water circulating passage can be suppressed. In addition, at least some of the hot water heated by the generator may be supplied to the first flow passage 4 without passing through the hot water storage tank 2, and control for actuating the heater 3b may be also used.

After execution of the anti-freezing control, it is determined whether or not a predetermined cancellation condition of the anti-freezing control is met in step S3. Specifically, it is determined whether or not a predetermined time has elapsed from the start of the execution of the anti-freezing control. Alternatively, it may be determined whether or not a temperature difference ΔT (= Tr1 - Tr2) between the radiator inlet temperature Tr1 and the radiator outlet temperature Tr2 of the radiator 3 becomes a predetermined value or less, to determine whether a cooling effect of the radiator 3 is reduced. In addition, non-satisfaction of the freezing condition may be set as the freezing cancellation condition, but, for example, when the condition for satisfying the freezing condition includes a condition in which the temperature difference between the upstream side and the downstream side of the radiator 3 is higher than or equal to a predetermined value ΔT1, it is preferred to suppress hunting of the control. For this reason, hysteresis may be provided by setting, for example, the condition in which the temperature difference between the upstream side and the downstream side of the radiator is less than or equal to a predetermined value ΔT2 (< ΔT1) as the requirement for satisfying the freezing cancellation condition.

When it is determined that the cancellation condition of the anti-freezing control is met in step S3, the process proceeds to step S4.

In step S4, a generator outlet-side target temperature value (hereinafter, referred to a "target temperature") SVTf2 (first return target value) of the outlet of the generator 1 positioned at a specific part of the second flow passage 5 is set to a minimum target temperature SVTf2_min. Here, the minimum target temperature SVTf2_min is set to, for example, about 55°C. Alternatively, a temperature obtained by adding a predetermined temperature ΔTf2 (for example, 8°C) to a current actual temperature PVTf2 may be set as the minimum target temperature SVTf2_min.

In step S5, it is determined whether or not the actual generator outlet-side temperature (hereinafter, referred to an "actual temperature") PVTf2 measured by the fourth temperature sensor 13 is higher than or equal to a value (second return target value) obtained by subtracting a predetermined temperature x from the current target temperature (first return target value) SVTf2. The predetermined temperature x is set to, for example, about 3°C.

Immediately after the anti-freezing control is canceled, since the amount of rise in water temperature with respect to an amount of heat generated by the generator 1 is reduced due to the increase in the water circulating flow rate, in general, the actual temperature PVTf2 becomes lower compared with the minimum target temperature SVTf_min.

Accordingly, at first, the determination in step S5 results in "NO" and the process proceeds to step S6 to determine whether or not the freezing condition is met again. At this time, if the freezing condition is not met, the process returns to step S5.

Then, the water circulating flow rate is reduced by the increase of the target temperature SVTf2 and thus the actual temperature PVTf2 rises. In step S5, if it is determined that the actual temperature PVTf2 is higher than or equal to the second return target value (= SVTf2 - x), the process proceeds to step S7.

In step S7, it is determined whether or not the actual temperature PVTf2 reaches a generator outlet-side standard temperature (standard target value) Tf2_std for the normal control. The standard target value Tf2_std is a final (at a steady state) target value in the normal control and is set to, for example, about 85°C.

After the start of the return control to the normal control, since the actual temperature PVTf2 is generally lower than the standard target value Tf2_std for a while, the determination in step S7 results in "NO" and the process proceeds to step S8 to determine whether or not the freezing condition is met again. At this time, if the freezing condition is not met, the process proceeds to step S9.

In step S9, the first return target value SVTf2 is updated to a value obtained by adding a predetermined temperature y to the first return target value. Here, the predetermined temperature y (> x > 0) is set to, for example, about 8°C.

Then, the process returns again to step S5 to repeat the determination described above. That is, in the general case in which the freezing condition is not met in steps S6 and S8, first, after the start of the return control to the normal control, when the actual temperature PVTf2 reaches a temperature lower than the minimum target temperature SVTf2_min by the predetermined value x (3°C), the first return target value SVTf2 is updated to a value obtained by increasing the predetermined value y (8°C). Thereafter, every time when it is checked that the actual temperature PVTf2 reaches the second return target value lower than the updated first return target value SVTf2 by the value x (3°C), the first return target value SVTf2 is updated to a value obtained by increasing the predetermined value y (8°C). It is possible to gradually close to the standard target value Tf2_std while repeating such an operation (that is, while confirming water temperature rising by a value of "y - x = 5°C").

Simply, in step S5, the process may be performed to update to a value increased by a predetermined value y (for example, 5°C) while confirming the increase of the predetermined value y without particularly setting the predetermined value x (x = 0°C). On the other hand, it is possible to rapidly raise the temperature while maintaining a rate close to a temperature rising rate immediately after updating by setting the predetermined value x (< y).

In this way, after it is determined in step S7 that the gradually rising actual temperature PVTf2 reaches the standard target value Tf2_std, the control is basically continued to maintain the actual temperature PVTf2 to the standard target value Tf2_std.

As described above, in the return control during the shifting to the normal control from the anti-freezing control, the target temperature SVTf2 is converged to the standard target value Tf2_std by gradually increasing the return target value, in which the minimum target temperature SVTf2_min is set as an initial value, without changing to the final standard target value Tf2_std for the normal control at once from the beginning. For this reason, as the water temperature of the actual temperature PVTf2 gradually increases, the water circulating flow rate gradually decreases. Thus, it is possible to quickly shift to the normal control while suppressing re-freezing of the water in the water circulating passage.

Particularly, in the present embodiment, the system is configured to update the rising of the standard target value SVTf2 while confirming that the actual temperature PVTf2 rises by following the rising of the standard target value SVTf2, and thus it is possible to obtain a stable anti-freezing function. However, the system may be simply configured to gradually increase the standard target value SVTf2 at every predetermined time.

In detail, since the predetermined or more water circulating flow rate can be secured by the return control, it is not necessary to set the cancellation condition (outside air temperature or circulating water temperature) of the anti-freezing control to be excessively high. For this reason, it is possible to shorten duration time of the anti-freezing control and thus to excellently maintain operation efficiency of the system 100.

In addition, it is possible to reduce the drop of hot-water temperature in the hot water storage tank 2 by the shortening of the duration time of the anti-freezing control.

Meanwhile, since the shift to the normal control can be rapidly performed, it is possible to quickly raise and restore the hot-water temperature in the hot water storage tank 2 which is temporarily lowered.

In particular, in a case in which the system uses the solid oxide fuel cell (SOFC) as a generator, since the system can be continuously operated for a long time and can recover heat with high-temperature water, the slightly lowering of the water temperature can have only a small influence on the system.

In addition, during the return control (or during the anti-freezing control), the temperature rising of the water is promoted by increasing the output of the generator 1 to increase an amount of the generated heat, and thus it is possible to accelerate the return to the normal control (or, it is possible to shorten the anti-freezing control time). In this case, when the output of the generator 1 is set to increase in advance and the rechargeable battery is provided in the system 100, the rechargeable battery may be charged by the surplus power. Furthermore, the generator 1 may be connected to a rechargeable battery outside the system 100 or a rechargeable battery mounted on an electric car or a hybrid vehicle during parking to charge the rechargeable battery using the surplus power.

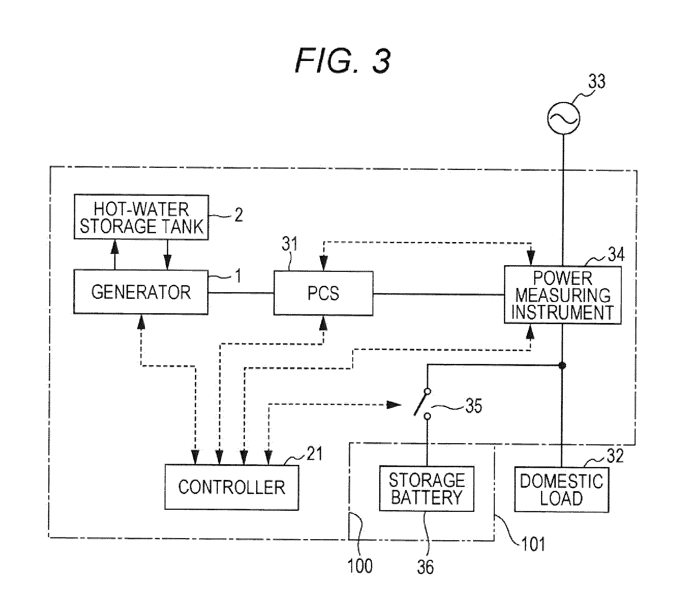

- Fig. 3: illustrates an example of storing the surplus power in the rechargeable battery during the return control as described above.
A PCS (power conditioner) 31 draws DC power from the generator 1 to convert the DC power into AC power and supplies the AC power to a household load 32. Note that, in a case in which the power generated by the generator 1 is less than demand power of the domestic load 32, system power is supplied to the domestic load 32 from a system power source 33 to fill the shortage.

A power measuring instrument 34 is attached to a power line between the system 100 (PCS 31) and the system power source 33 to measure power to be supplied to the domestic load 32 from the PCS 31 and the system power 33.

A rechargeable battery 36 is disposed by the intermediary of a switch 35 from a power line which connects the power measuring instrument 34 and the domestic load 32. The rechargeable battery 36 is similarly applicable to any of a rechargeable battery (such as a domestic rechargeable battery or a rechargeable battery mounted on an electric car or a hybrid vehicle) disposed outside the system 100 as indicated by the illustrated dashed-dotted line or a rechargeable battery (such as a rechargeable battery to be used in starting the system) disposed inside a system 101 as indicated by the illustrated dashed-two dotted line.

The controller 21 for carrying out the anti-freezing control and the return control controls the generation power of the generator 1 depending on the demand power of the domestic load 32, based on the value measured by the power measuring instrument 34, as a basic control. In addition, the controller sets and controls the current, which is extracted from the generator 1, using the PCS 31 based on the target value of the generation power. Furthermore, the controller predicts the generation of reverse power flow in which the supply power is excessive with respect to the demand power due to the rapid decrease of the demand power of the domestic load 32, based on the value measured by the power measuring instrument 34. Then, when predicting the generation of the reverse power flow, the controller stores a temporarily excessive power in the rechargeable battery 36 by turning ON the switch 35 while controlling to reduce the power generated from the generator 1 for the purpose of the suppression of the reverse power flow.

In the above configuration provided with the rechargeable battery, the controller 21 cancels the anti-freezing control to temporarily increase the generation power of the generator 1 during the return control (or during the anti-freezing control) which shifts to the normal control. Then, an extraction drawing current is increased by the control of the PCS 31, and the surplus power is stored in the rechargeable battery 36 by turning ON the switch 35. In this way, it is possible to shorten a return time (or anti-freezing control time) to the normal control as much as possible by sufficiently increasing the power generation amount while suppressing the reverse power flow.

In the present embodiment, the generator outlet temperature measured by the third temperature sensor 12 is controlled to the target temperature in order to control the water temperature at the outlet side of the generator in the second flow passage 5. In addition, the water temperature of portions other than the above part in the second flow passage 5 may be controlled to the target temperature. For example, the inlet temperature Ts1 of the hot water storage tank 2 measured by the fourth temperature sensor 13 may be controlled to the target temperature.

By the way, even during the return control having the anti-freezing function and during the normal control after the return as described above, there may be a case in which the freezing condition is met by some reasons such as a strong wind blowing by which the amount of cooling of the radiator 3 is rapidly increased.

Therefore, in the present embodiment, even during the return control and the normal control after the return, it is determined whether or not the freezing condition is met (step S1, step S6, and step S8). Then, when the freezing condition is met, the process returns to step S2 and executes the anti-freezing control.

Thus, it is possible to more reliably suppress the freezing by monitoring the freezing condition at all times and by executing the anti-freezing control when the freezing condition is met.

On the other hand, as in a system using the polymer electrolyte fuel cell (PEFC) as the generator, in the system which is essential to operate for a predetermined time and stop repeatedly every day, the freezing of the water in the water circulating passage may occur during the stop of the system.

In addition, as in a system using the solid oxide fuel cell (SOFC) as the generator, in the system which is essential to operate continuously, it is possible to generally suppress the freezing by executing the anti-freezing control while determining a situation in which there is a risk of the freezing of the water in the water circulating passage. However, in a case of restarting the operation after the stop of the system for a long time, the freezing of the water in the water circulating passage may occur during the stop.

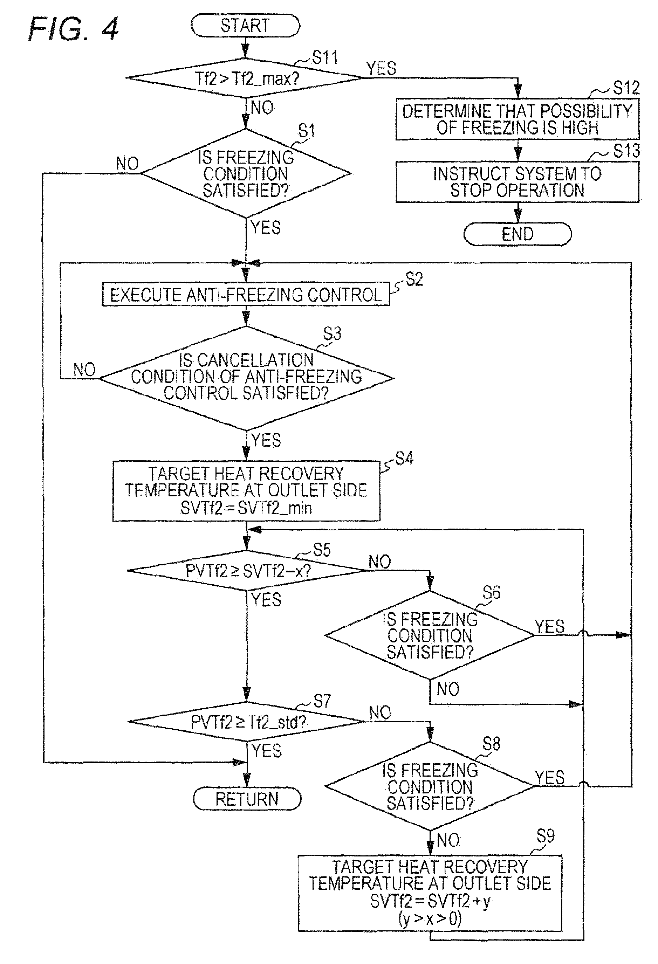

- Fig. 4: illustrates a control flow of a second embodiment including a determination of such a freezing state.

In step S 11, it is determined whether or not the outlet-side temperature (actual temperature) Tf2 of the generator 1 exceeds an upper-limit set temperature Tf2_max. Note that the generator outlet temperature Tf2 of the circulating water may also be measured with a sensor for measuring an outlet temperature of the circulating water in a heat exchanging unit 15 which recovers heat from an exhaust gas in a fuel cell system, for example.

When it is determined that the generator outlet temperature exceeds the upper-limit set temperature Tf2_max, it is determined that there is a high possibility of the freezing of the water in the water circulating passage in step S12.

That is, when the freezing of the water in the water circulating passage occurs, the water circulating passage (mainly, radiator 3) is closed to inhibit the water from being circulated or a flow passage cross-sectional area of the water circulating passage is reduced, and accordingly, the water in the second flow passage 5, especially, the water staying near the outlet of the generator 1 continuously receives the heat from the generator 1 and thus the temperature thereof excessively rises. As a result, the actual temperature Tf2 exceeds the upper-limit set temperature Tf2_max. Thus, it is possible to determine a situation in which there is a high possibility of the freezing.

Then, when it is determined that there is a high possibility of the freezing of the water in the water circulating passage, the command for stopping the operation of the system 100 is output in step S13, to suppress an adverse effect on the system 100 due to forced operation and thus a failure occurrence.

On the other hand, when it is determined that the actual temperature Tf2 does not exceed the upper-limit set temperature Tf2_max in step S11, it is determined that there is no freezing of the water in the water circulating passage, and the process proceeds to step S1 and subsequent steps. Then, as in the first embodiment, when there is a risk of the freezing of the water in the water circulating passage by the determination of the freezing condition, the anti-freezing control is executed.

In addition, while the embodiments of the present invention have been described with reference to the drawings as above, these embodiments have been presented by way of example only, and needless to say, the present invention includes not only one directly indicated by the described embodiments but also various improvements and modifications, which is achieved by one skilled in the art within the scope of the appended claims.

For example, the water circulator is housed in the case 1 a of the generator 1 as an example in the embodiments of the present invention, but may be housed in the tank case 9. Furthermore, the heater 3b is provided in the vicinity of the radiator 3 to heat the water passing through the radiator 3 as an example in the embodiments of the present invention, but may be provided in the vicinity of the water circulating passage to heat the water in the water circulating passage.

### List of reference numerals

- 1: - Generator
- 2: - hot water storage tank
- 3: - Radiator
- 4: - First flow passage
- 5: - Second flow passage
- 6: - Water circulator
- 7: - Hot water outflow pipe
- 8: - Water supply pipe
- 9: - Tank case
- 9a: - Air vent
- 10: - First temperature sensor
- 11: - Second temperature sensor
- 12: - Third temperature sensor
- 13: - Fourth temperature sensor
- 14: - Fifth temperature sensor
- 21: - Controller
- 100, 100': - ogeneration system

## Claims

1. A device for controlling a cogeneration system, comprising:
a generator for generating electricity that produces heat;
a hot water storage tank that stores water;
a first flow passage that supplies water in the hot water storage tank to a heat exchanging unit of the generator;
a second flow passage that supplies hot water heated by the heat exchanging unit of the generator into the hot water storage tank;
a water circulator that circulates water in a water circulating passage including the generator, the hot water storage tank, the first flow passage, and the second flow passage;
a temperature measuring unit that measures a water temperature of the second flow passage; and
a control unit that executes: normal control in which the water circulator is operated such that a water temperature at a specific part of the second flow passage is close to a standard target value; anti-freezing control in which freezing of the water in the water circulating passage is suppressed when a freezing condition of the water circulating passage is met; and return control in which a first return target value of the water temperature at the specific part of the second flow passage is raised in a stepwise up to the standard target value for the normal control at the time of shifting to the normal control from the anti-freezing control.

2. The device for controlling the cogeneration system according to claim 1, in which in, in the return control, the control unit updates the first return target value to a value increased by a predetermined amount every time when it is confirmed that the water temperature of the second flow passage acquired by the temperature measuring unit reaches a second return target value lower than the first return target value, the second return target value being set to be close to the first return target value.

3. The device for controlling the cogeneration system according to claim 1, in which in, in the return control, the control unit updates the first return target value to a value increased by a predetermined amount every time when it is confirmed that the water temperature of the second flow passage acquired by the temperature measuring unit reaches the first return target value.

4. The device for controlling the cogeneration system according to claim 1, in which in a cooling radiator is interposed in the first flow passage, and a cancellation condition of the freezing condition includes a condition in which a temperature difference between an inlet temperature and an outlet temperature of the radiator is reduced to a predetermined value or less.

5. The device for controlling the cogeneration system according to claim 1, in which in the control unit further includes control for operating the water circulator in the normal control such that a water circulating flow rate of the water circulating passage is increased when a measured value of the water temperature at the specific part of the second flow passage is higher than the standard target value and that the water circulating flow rate of the water circulating passage is decreased when the measured value is lower than the standard target value.

6. The device for controlling the cogeneration system according to claim 1, in which in, in the return control, the control unit increases a power generation amount of the generator and stores surplus power in a rechargeable battery provided in the system or outside the system.

7. The device for controlling the cogeneration system according to claim 1, in which in the control unit determines that freezing occurs in the water circulating passage when the water temperature at the specific part of the second flow passage is higher than or equal to a set upper-limit temperature.

8. A method for controlling a cogeneration system that includes a generator for generating electricity that produces heat, a hot water storage tank that stores water, a first flow passage that supplies water in the hot water storage tank to a heat exchanging unit of the generator, a second flow passage that supplies hot water heated by the heat exchanging unit of the generator into the hot water storage tank, and a water circulator that circulates water in a water circulating passage including the generator, the hot water storage tank, the first flow passage, and the second flow passage,
the method comprising:
executing normal control in which a water temperature at a specific part of the second flow passage is close to a standard target value;
executing anti-freezing control when a freezing condition of the water circulating passage is met; and
executing return control in which a target value of the water temperature is gradually raised up to the standard target value for the normal control at the time of shifting to the normal control from the anti-freezing control after canceling the freezing condition.
